# EUROPEAN PATENT SPECIFICATION

(11) **EP 3 248 417 B1**
(45) Date of publication and mention of the grant of the patent: **23.11.2022**
(21) Application number: 15879151.7
(22) Date of filing: 20.01.2015
(51) Int. Cl.: H04W 48/18, H04W 76/15, H04W 48/16, H04W 4/70

(54) **METHOD AND APPARATUS FOR IMPLEMENTING INTER-RADIO-ACCESS-TECHNOLOGIES FOR SERVICES**
VERFAHREN UND VORRICHTUNG ZUR IMPLEMENTIERUNG VON INTERFUNKZUGANGSTECHNOLOGIEN FÜR DIENSTE
PROCÉDÉ ET APPAREIL PERMETTANT DE METTRE EN OEUVRE DES TECHNOLOGIES D'ACCÈS ENTRE RÉSEAUX RADIO POUR DES SERVICES

(43) Date of publication of application: 29.11.2017
(73) Proprietor: Nokia Solutions and Networks Oy, 02610 Espoo (FI)
(72) Inventor: CHANDRAMOULI, Devaki, Plano, TX 75074 (US); HWANG, Woonhee, FI 02180 Espoo (FI)
(74) Representative: Nokia EPO representatives
(86) International application number: PCT/US2015/012059
(87) International publication number: WO 2016/118117

(56) References cited:
- EP-A1- 2 814 297
- WO-A1-2014/130091
- US-A1- 2010 178 919
- US-A1- 2013 203 411
- US-A1- 2014 064 094
- US-A1- 2014 287 753
- US-A1- 2014 301 288
- US-A1- 2014 370 885
- US-B1- 8 781 475

## Description

### BACKGROUND:

### Field:

Embodiments of the present invention relate to implementing inter-radio-access-technologies for services.

### Description of the Related Art:

Long-term Evolution (LTE) is a standard for wireless communication that seeks to provide improved speed and capacity for wireless communications by using new modulation/signal processing techniques. The standard was proposed by the 3^{rd} Generation Partnership Project (3GPP), and is based upon previous network technologies. Since its inception, LTE has seen extensive deployment in a wide variety of contexts involving the communication of data.

WO2014130091 A1 discloses a user equipment that is configured to identify one or more available access networks and to establish a connection with an access network of the available access networks, having a highest relative priority based on network selection rules. Priorities may be assigned based on type of IP traffic, e.g. voice services preferably routed over a cellular network and web browsing over WLAN or WiMAX.

EP2814297 A1 discloses a control server and a terminal in a multimode radio system that are connected via a basic link. In order to exchange control information, the control server selects for each service of the terminal a network for transmission according to settings, which also considers the type of service to be used by the terminal and where the terminal may perform signal measurements on the different networks and also may provide information concerning its communication capabilities.

It is thus an object to increase connectivity robustness and flexibility for inter-radio-access-technologies.

### SUMMARY:

The invention is set out by the appended independent claims. Provided is a method performed by a user equipment according to claim 1 and a corresponding user equipment according to claim 3, a method performed by an evolved node B according to claim 5 and a corresponding evolved node B according to claim 7 as well as a method performed by a user equipment according to claim 9 and a corresponding user equipment according to claim 11. Further embodiments are defined by the dependent claims.

### BRIEF DESCRIPTION OF THE DRAWINGS:

For proper understanding of the invention, reference should be made to the accompanying drawings, wherein:
Fig. 1 illustrates an example evolved-packet core architecture.
Fig. 2 illustrates an example 5G architecture.
Fig. 3 illustrates an example 5G deployment.
Fig. 4 illustrates control-plane (C-plane) connectivity of evolved Node Bs involved in dual connectivity.
Fig. 5 illustrates user-plane (U-plane) connectivity of evolved Node Bs involved in dual connectivity.
Fig. 6 illustrates example architectures for dual connectivity.
Fig. 7 illustrates an example use case in accordance with certain embodiments of the present invention.
Fig. 8 illustrates user-equipment-initiated service setup in accordance with certain embodiments of the present invention.
Fig. 9 illustrates network-initiated service setup in accordance with certain embodiments of the present invention.
Fig. 10 illustrates a flowchart of a method in accordance with embodiments of the invention.
Fig. 11 illustrates a flowchart of a method in accordance with embodiments of the invention.
Fig. 12 illustrates a flowchart of a method in accordance with embodiments of the invention.
Fig. 13 illustrates a flowchart of a method in accordance with embodiments of the invention.
Fig. 14 illustrates an apparatus in accordance with embodiments of the invention.
Fig. 15 illustrates an apparatus in accordance with embodiments of the invention.
Fig. 16 illustrates an apparatus in accordance with embodiments of the invention.
Fig. 17 illustrates an apparatus in accordance with embodiments of the invention.
Fig. 18 illustrates an apparatus in accordance with embodiments of the invention.

### DETAILED DESCRIPTION:

Embodiments of the present invention relate to implementing inter-radio-access-technologies (inter RAT) for different services. Embodiments of the present invention may trigger setup of dual connectivity from one radio-access technology to another radio-access technology (such as from LTE to 5G, from 5G to WiFi, and/or from LTE to WiFi, for example) so that the UE is connected to both radio-access technologies. The setup of dual connectivity may be triggered when a need for a new service is detected. This triggering may ensure that dual connectivity is established "on demand," and thus resources may be used more efficiently.

As described in greater detail below, the setup of dual connectivity can be initiated by a user equipment (UE) or by a network. According to a first option, dual connectivity may be initiated by the UE. When the UE is registered for a first radio-access technology (such as being registered for LTE, for example) with the common core network, the UE may receive policy information from the network regarding the preferred radio-access technologies (RATs) for different services. For example, LTE/2G/3G may be preferred for voice, 5G/LTE may be preferred for internet services, and/or 5G may be preferred for vehicle-to-vehicle (V2V) services.

Once the UE enters a coverage area of a second radio-access technology (such as a 5G coverage area), the UE may detect that new services (such as V2V services, machine-to-machine services, tactile internet services, mobile broadband services, public safety services, industrial control services, railways services, and device-to-device services, for example) are offered by the network. The UE may know that 5G is preferred for V2V, and the UE may also know that the UE is currently in an area where 5G coverage is available. The UE may know that the UE is in an area where 5G coverage is available based on a measurement report, for example. As such, in one embodiment of the present invention, the UE may initiate requests for service setup, which may trigger setup of a radio-resource-control (RRC) connection in 5G.

According to a second option, the network may initiate dual connectivity. When the UE is registered for a first radio-access technology (such as being registered for LTE, for example) with the common core network, the UE may receive policy information from the network regarding the preferred RATs for different services. When the network detects a need for a new service (such as with mobile-terminated cases, for example) that can be served only by a certain radio-access technology (such as 5G, for example), then the network can trigger the UE to establish services in 5G using one of the following two methods. In one method, the network may notify the UE via evolved UMTS Terrestrial Radio Access Network (E-UTRAN). In another method, the network may page the UE via 5G radio, if the UE is connected in E-UTRAN but also listens to a paging channel in 5G.

In view of the above, embodiments of the present invention may provide the benefit of improving mobility robustness with inter RAT handovers. For example, when the UE loses 5G coverage, the UE may still have a RRC connection in LTE. When the UE enters a 5G area from an LTE area, where LTE is still offered in the 5G area, the UE need not relinquish the LTE connection, thus obtaining more reliable service. As such, a new service setup may be the first trigger for a establishing a 5G connection.

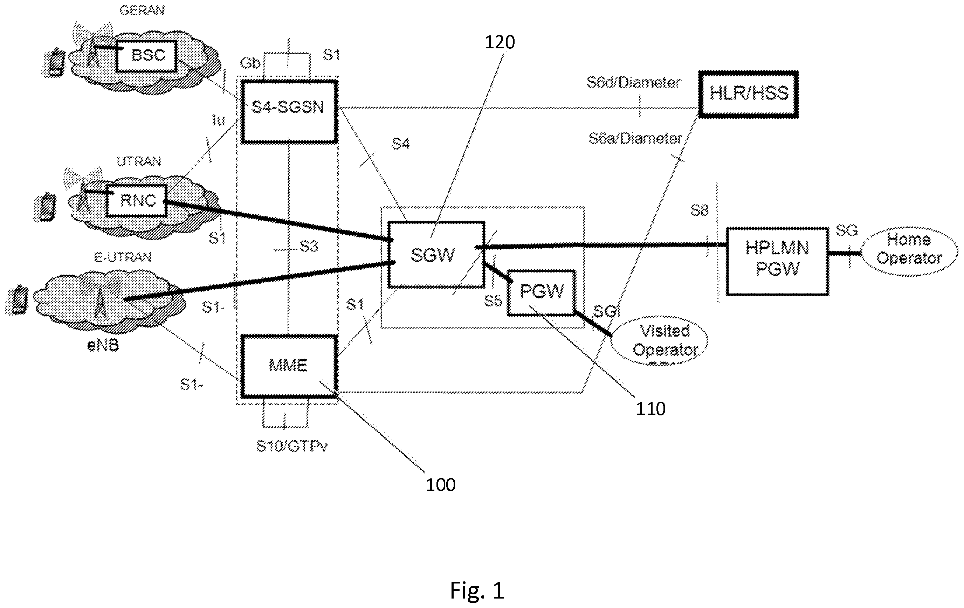

Fig. 1 illustrates an example evolved-packet core architecture. In general, evolved-packet system (EPS) technologies may be considered to be the successor to general-packet-radio system (GPRS) technologies. EPS may provide a new radio interface and may provide new packet core network functions for broadband-wireless data access. Such EPS core network functions may include a mobility management entity (MME) 100, a packet data network gateway (PDN-GW) 110, and/or a serving gateway (S-GW) 120.

A common-packet domain core network may be used for radio-access networks (RAN), GSM EDGE radio access networks (GERAN), and/or UMTS terrestrial radio access networks (UTRAN). This common-packet domain core network may also provide general-packet-radio-service (GPRS) services.

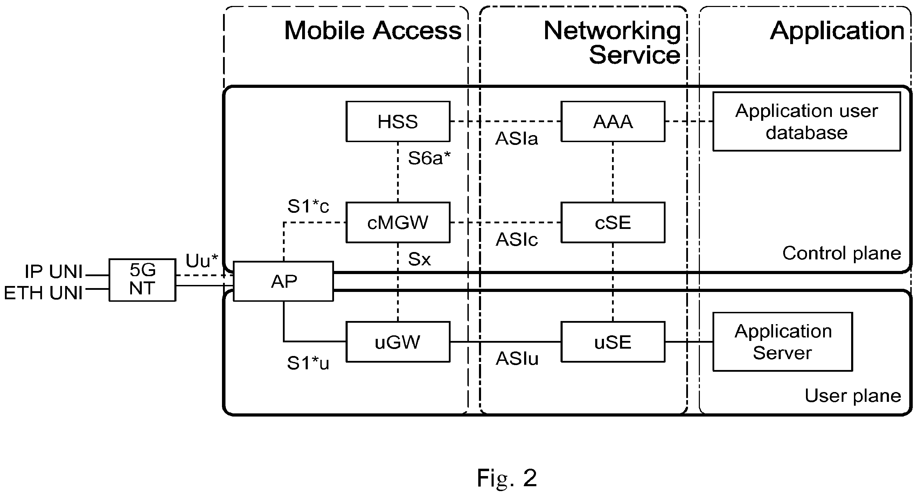

5G systems may provide new mobile low-latency and ultra-reliable services. Some services, like vehicle-to-vehicle/vehicle-to-infrastructure (V2X) services, may be more efficiently provided by 5G systems as compared to being provided by other systems. Fig. 2 illustrates an example 5G architecture.

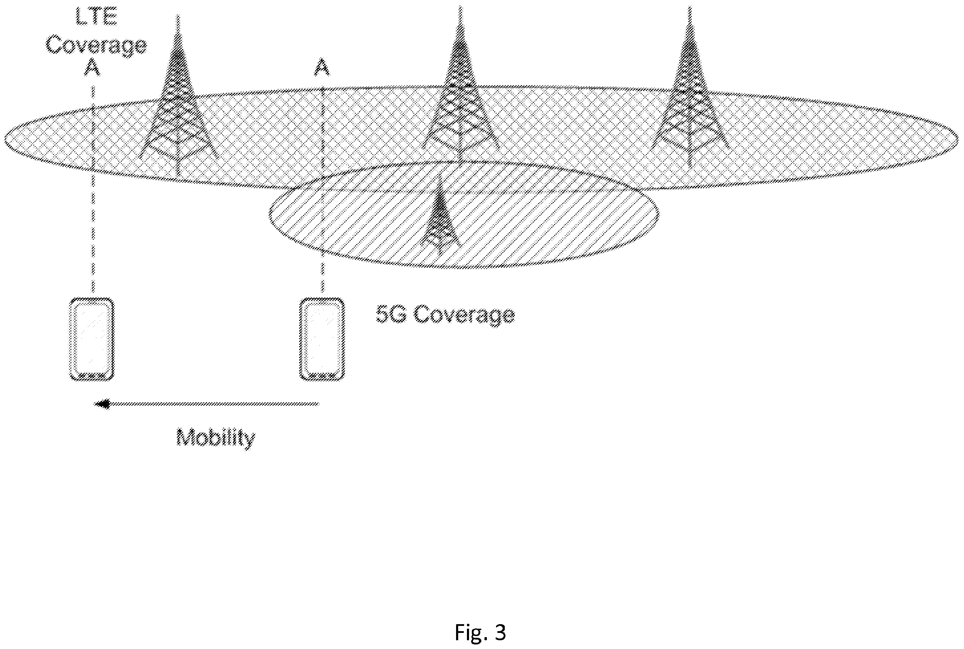

Fig. 3 illustrates an example 5G deployment. During the early days of 5G deployment, the 5G coverage area will not be expected to be nationwide. As such, it may be desirable to develop a method for enabling 5G devices (such as a UE) to camp in other radio access technologies (such as, for example, LTE) which are widely available, so that the UE does not immediately lose the connection to the network upon losing 5G coverage.

Traditional inter-RAT handover (HO) was designed for macrocells with larger corresponding coverage areas. As such, frequent mobility (and the corresponding ping-pong effects) was not expected to occur when using the traditional approaches. This means that the border of each RAT is not widely spread over the coverage. However, because 5G cells use high-frequency spectrum (such as cmWave and mmWave), the cell sizes of the 5G cells will generally be small. Also, because 5G may be utilized for throughput booster, the 5G and other RAT borders will generally be much wider, and frequent RAT changes are expected. Thus, it may be desirable to consider methods that improve mobility robustness and reliability.

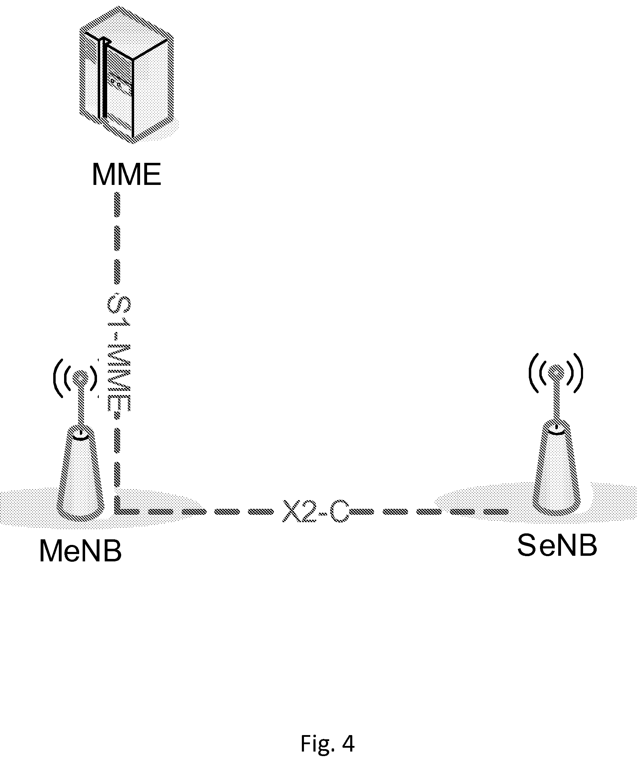

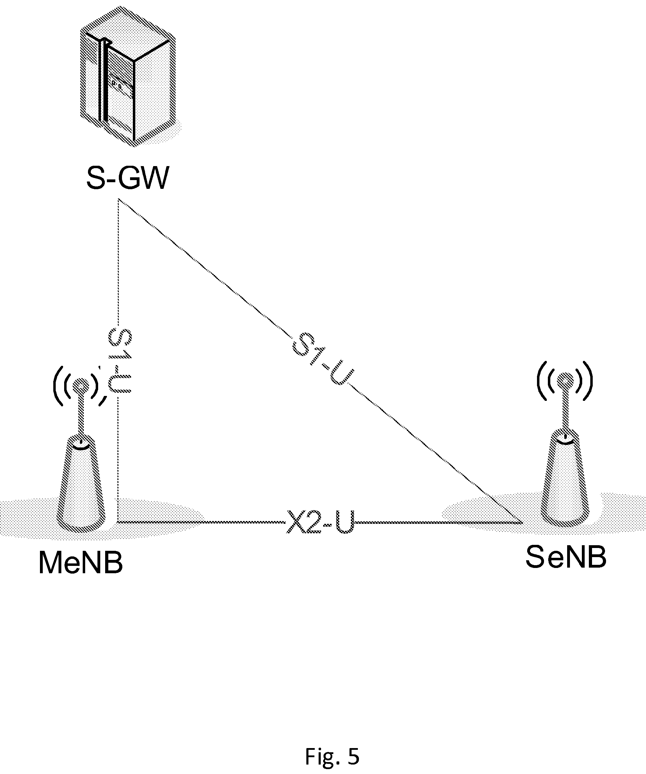

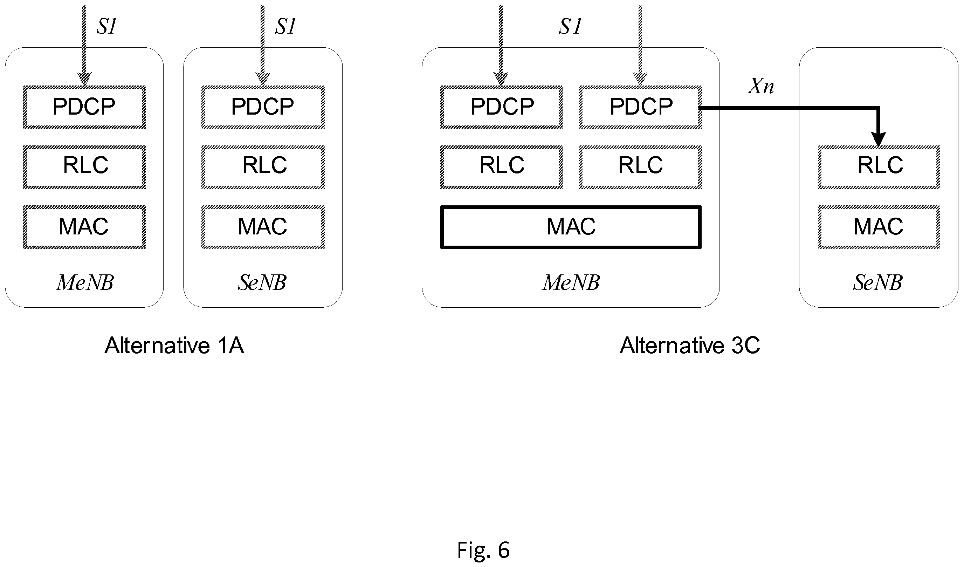

Dual connectivity is defined in LTE to increase the capacity per UE. Fig. 4 illustrates a control-plane (C-plane) connectivity of evolved Node Bs involved in dual connectivity. Fig. 5 illustrates user-plane (U-plane) connectivity of evolved Node Bs involved in dual connectivity. Fig. 6 illustrates example architectures for dual connectivity. With dual-connectivity (DC), radio-resource-control (RRC) signalling may be provided by only a master evolved Node B (MeNB) to a UE. The MeNB may be responsible to set up DC and to tear down DC, even though a secondary eNB (SeNB) may tear down DC for local reasons. The MeNB may also decide which bearer is to be served by the SeNB.

As described above, certain embodiments of the present invention may activate dual connectivity. For example, certain embodiments of the present invention may activate LTE/5G dual connectivity for optimized interworking between LTE and 5G. For Mobile-Originated (MO) cases, a common core network (via, for example, a connection-manager gateway (cMGW)) may provide mapping between services and suitable RATs (such as providing a mapping table, for example), and the UE may trigger a service according to the provided mapping. For Mobile-Terminated (MT) cases, the common core network may provide an indication that a 5G service has to be activated via a legacy RAT to which the UE is currently connected to. This activation can be performed via an Access Stratum (AS) layer or via a non-Access Stratum (NAS) layer. Depending on the availability of 5G, the core network may receive either a positive or a negative feedback per each 5G activation request.

For MT cases, the core network may page the UE directly while the UE is in the 5G area. Certain embodiments of the present invention may be applicable to LTE and Wi-Fi interworking, as well as to 5G and Wi-Fi interworking.

Certain embodiments of the present invention may trigger setup of dual connectivity upon detection that a new service may be needed. This triggering may enable establishment of an RRC connection in both RATs, and thus, certain embodiments of the present invention may improve reliability of the connection. Certain embodiments of the present invention may improve the reliability of the connection while ensuring that dual connectivity is established only "on demand." By ensuring that dual connectivity is established "on demand," the resources may be used more efficiently.

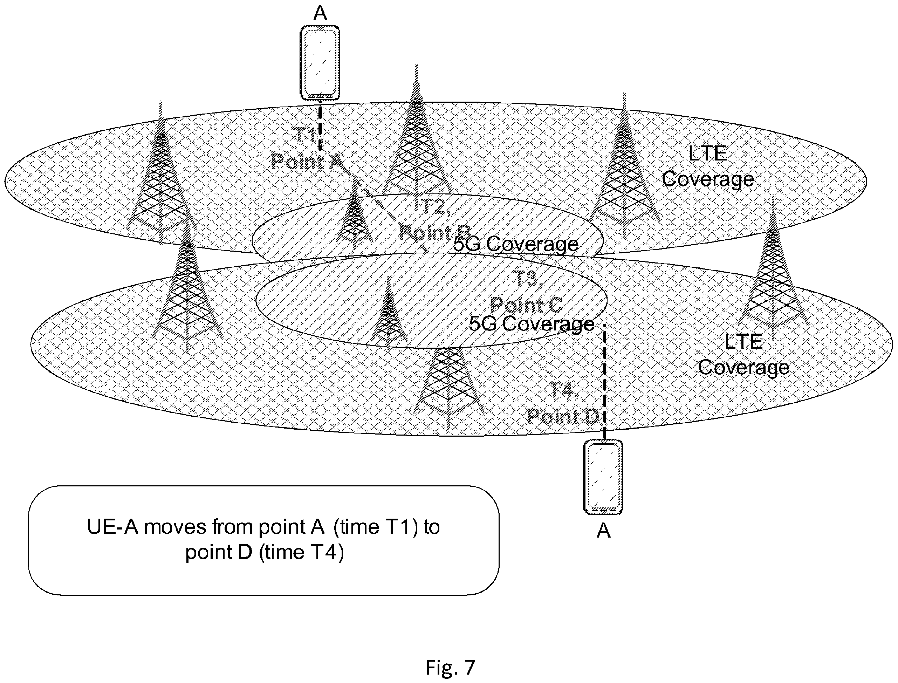

Fig. 7 illustrates an example use case in accordance with certain embodiments of the present invention. With certain embodiments of the present invention, the UE may be served by LTE, and the UE may obtain services that can be offered by the LTE network (such as voice-over-LTE and/or internet services, for example).

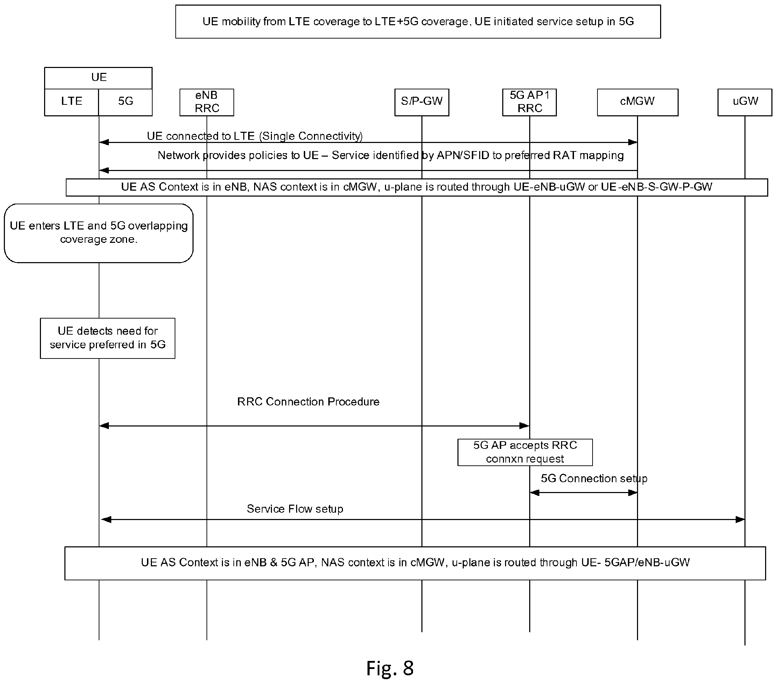

Fig. 8 illustrates user-equipment initiated service setup in accordance with certain embodiments of the present invention. Certain embodiments of the present invention may be directed to a UE-initiated setup of a service that triggers dual connectivity to 5G. When the UE is registered for LTE with the common core network (via a cMGW, for example), the UE receives policy information from the network regarding the preferred RAT information for different services. The received information may be a mapping between access-point-names/service-flow-identifiers (APN/SFID) and preferred RATs. This mapping may indicate that LTE/2G/3G is preferred for voice, that 5G/LTE is preferred for internet services, and/or that 5G is preferred for vehicle-to-vehicle (V2V) services, for example.

Referring to Fig. 7, when the UE moves from point A to B, the UE enters a 5G coverage area. In this 5G coverage area, the UE may detect that new V2V services are offered by the network. The UE may determine that new V2V services are offered, for example, based on a service announcement transmitted to the UE by a traffic controller in the area, for example. The UE may also detect that new V2V services are offered based on a trigger from the user as the user initiates a new application that requires setup of V2V services, for example.

When the UE determines that V2V services are needed, the UE may be aware that 5G is preferred for V2V. The UE may also be aware that the UE is currently in an area where 5G coverage is available. The UE may be aware that the UE is in the area where 5G coverage is available, for example, based on a measurement report. So, the UE may initiate requests for service setup which triggers setup of RRC connections in 5G.

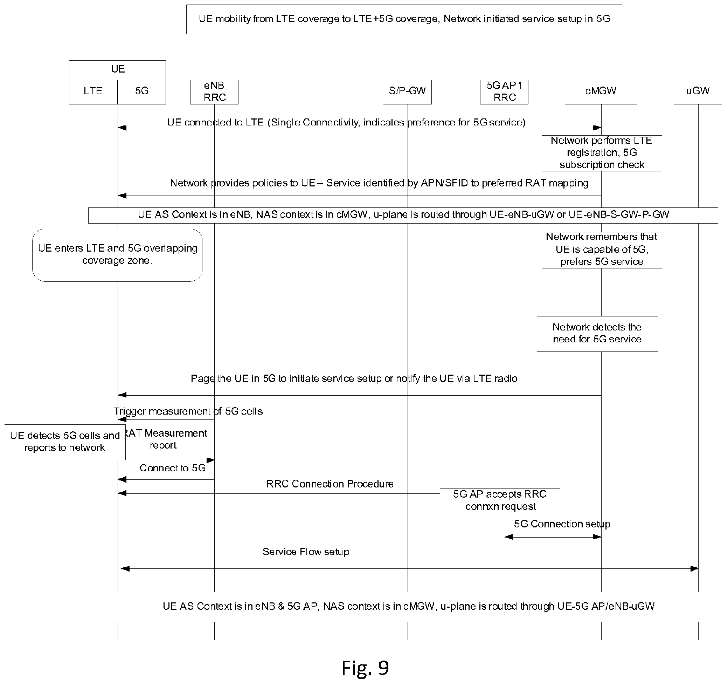

Fig. 9 illustrates network-initiated service setup in accordance with certain embodiments of the present invention. Certain embodiments of the present invention may be directed to a network-detected service triggering of dual connectivity to 5G. When the UE is registered for LTE with the common core network (via a cMGW, for example), the UE may indicate the UE's preference for 5G services to the core network. So, the core network may perform a subscription check for 5G, and the network may also provide service-based RAT preferences to the UE. Thus, the UE may receive policy information from the network regarding the preferred RATs for different services. This could be a mapping between APN/SFID and preferred RATs. This mapping may indicate that LTE/2G/3G is preferred for voice, that 5G/LTE is preferred for internet services, and/or that 5G is preferred for V2V services, for example.

The network may remember that the UE is interested in 5G services. When the network detects the need for a new service (such as with mobile-terminated cases, for example) that can be served only in 5G, then the network can trigger the UE to establish services in 5G using one of the following 2 methods.

With a first method, the network may notify the UE via an E-UTRAN radio network, assuming that the eNB is upgraded. With a second method, the network may page the UE via 5G radio, assuming that the UE is connected in E-UTRAN but also listens to a paging channel in 5G.

With the first method, an eNB (of the network) triggers the UE to perform 5G measurements and, based on a measurement report, the eNB determines whether the UE is in the 5G coverage area or not. Thus, the eNB may report a positive or negative acknowledgement to the core network. If the UE is in the 5G coverage area, the eNB can request the UE to establish an RRC connection in 5G in order to set up a new service.

With the second method, the UE is expected to respond to paging via 5G radio (i.e., to establish an RRC connection). The network can then initiate establishment of a new service in the 5G radio network.

In view of the above, as described above, certain embodiments of the present invention may improve mobility robustness with inter RAT. For example, when the UE loses 5G coverage, the UE may still have an RRC connection in LTE.

When the UE enters the 5G coverage area from an LTE area (where LTE is still offered in the 5G coverage area), the UE need not relinquish the LTE connection to obtain more reliable service. A new service setup may be the first trigger for establishing the 5G connection. Now, even if the UE loses 5G coverage, the UE still has a radio connection with LTE

When the UE is in the LTE area and is within the 5G coverage area, the UE need not always have dual RRC connections. Maintaining two RATs all the time may not be resource-efficient from the network's point of view and from the UE's point of view. Thus, service-based dual connectivity triggers may be utilized to provide a more resource-efficient implementation.

Furthermore, certain embodiments of the present invention may provide a generic solution that can be adopted for interworking in general. The interworking may be interworking between 5G and Wi-Fi, between LTE and Wi-Fi, as service-based dual connectivity may be beneficial for tighter interworking.

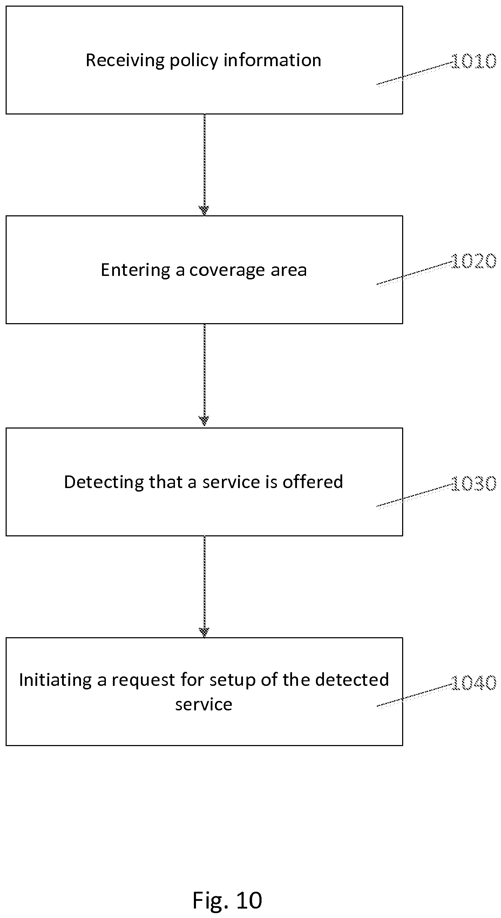

Fig. 10 illustrates a flowchart of a method in accordance with embodiments of the invention. The method illustrated in Fig. 10 includes, at 1010, receiving, by a user equipment, policy information from a network. The policy information indicates at least one preferred radio-access-technology for a service. The method may also include, at 1020, entering a coverage area of the at least one preferred radio-access-technology. The method may also include, at 1030, detecting that the service corresponding to the at least one preferred radio-access-technology is offered in the coverage area. The method may also include, at 1040, initiating a request for setup of the detected service.

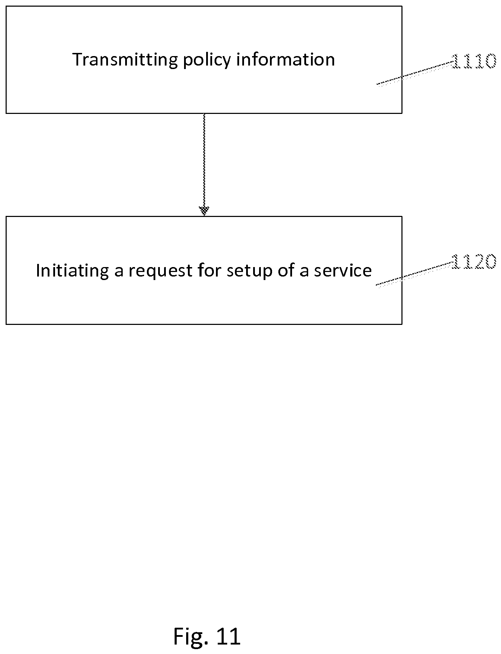

Fig. 11 illustrates a flowchart of a method in accordance with embodiments of the invention. The method illustrated in Fig. 11 includes, at 1110, transmitting policy information to a user equipment. The policy information indicates at least one preferred radio-access-technology for a service. The method may also include, at 1120, initiating a request for setup of the service. The request is received from the user equipment. The request is transmitted by the user equipment after the user equipment enters a coverage area of the at least one preferred radio-access-technology corresponding to the service.

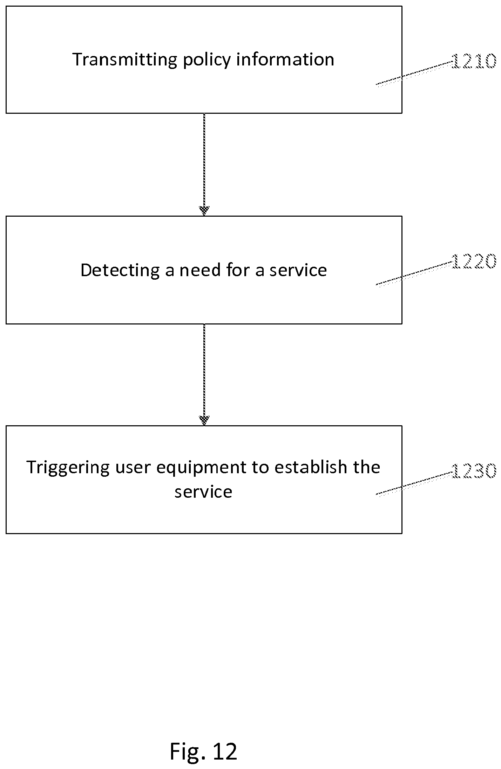

Fig. 12 illustrates a flowchart of a method in accordance with embodiments of the invention. The method illustrated in Fig. 12 includes, at 1210, transmitting, by a network node, policy information to a user equipment. The user equipment is registered for a first radio-access technology. The policy information indicates that a second radio-access technology is a preferred radio-access-technology for a service. The method may also include, at 1220, detecting a need for the service. The method may also include, at 1230, triggering the user equipment to establish the service in the second radio-access technology. The first radio-access technology comprises Long-term evolution, and the second radio-access technology comprises 5G.

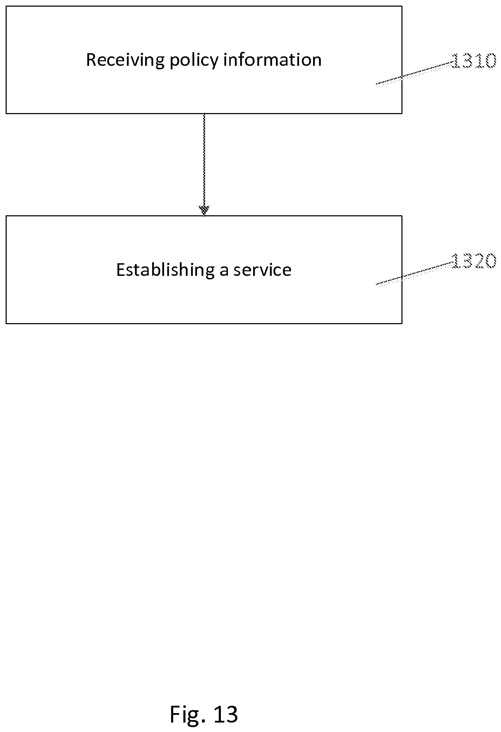

Fig. 13 illustrates a flowchart of a method in accordance with embodiments of the invention. The method illustrated in Fig. 13 includes, at 1310, receiving, by a user equipment, policy information. The user equipment is registered for a first radio-access technology. The policy information indicates that a second radio-access technology is a preferred radio-access-technology for a service. The method may also include, at 1320, establishing the service in the second radio-access technology. The first radio-access technology may include Long-term evolution, and the second radio-access technology comprises 5G.

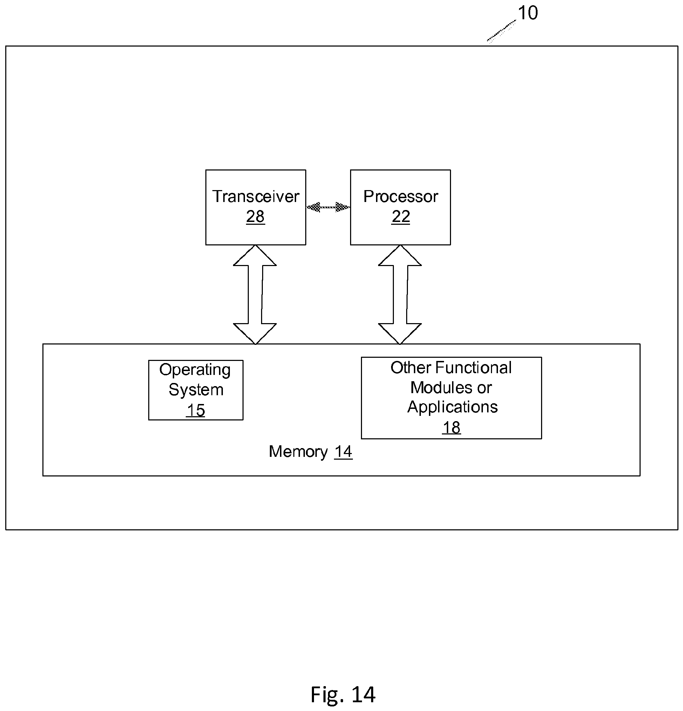

Fig. 14 illustrates an apparatus in accordance with certain embodiments of the invention. In one embodiment, the apparatus can be a user equipment, a base station, and/or a cMGW, for example. Apparatus 10 can include a processor 22 for processing information and executing instructions or operations. Processor 22 can be any type of general or specific purpose processor. While a single processor 22 is shown in Fig. 14, multiple processors can be utilized according to other embodiments. Processor 22 can also include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 can further include a memory 14, coupled to processor 22, for storing information and instructions that can be executed by processor 22. Memory 14 can be one or more memories and of any type suitable to the local application environment, and can be implemented using any suitable volatile or nonvolatile data storage technology such as a semiconductor-based memory device, a magnetic memory device and system, an optical memory device and system, fixed memory, and removable memory. For example, memory 14 include any combination of random access memory (RAM), read only memory (ROM), static storage such as a magnetic or optical disk, or any other type of non-transitory machine or computer readable media. The instructions stored in memory 14 can include program instructions or computer program code that, when executed by processor 22, enable the apparatus 10 to perform tasks as described herein.

Apparatus 10 can also include one or more antennas (not shown) for transmitting and receiving signals and/or data to and from apparatus 10. Apparatus 10 can further include a transceiver 28 that modulates information on to a carrier waveform for transmission by the antenna(s) and demodulates information received via the antenna(s) for further processing by other elements of apparatus 10. In other embodiments, transceiver 28 can be capable of transmitting and receiving signals or data directly.

Processor 22 can perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 can store software modules that provide functionality when executed by processor 22. The modules can include an operating system 15 that provides operating system functionality for apparatus 10. The memory can also store one or more functional modules 18, such as an application or program, to provide additional functionality for apparatus 10. The components of apparatus 10 can be implemented in hardware, or as any suitable combination of hardware and software.

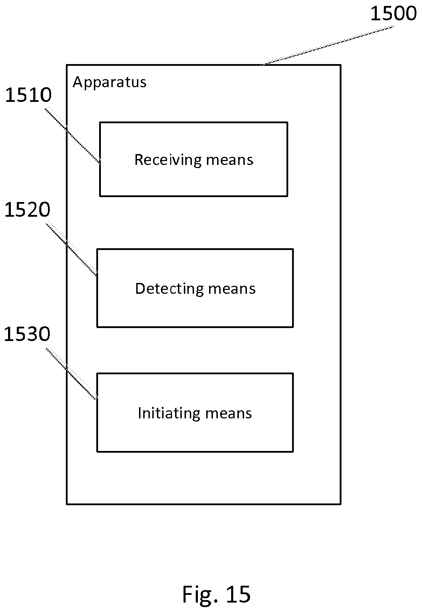

Fig. 15 illustrates an apparatus in accordance with embodiments of the invention. Apparatus 1500 can be a network element/entity such as a user equipment, for example. Apparatus 1500 can include a receiving means 1510 that receives policy information from a network. The policy information indicates at least one preferred radio-access-technology for a service. Apparatus 1500 may enter a coverage area of the at least one preferred radio-access-technology. Apparatus 1500 may include a detecting means 1520 that detects that the service corresponding to the at least one preferred radio-access-technology is offered in the coverage area. Apparatus 1500 may also include an initiating means 1530 that initiates a request for setup of the detected service.

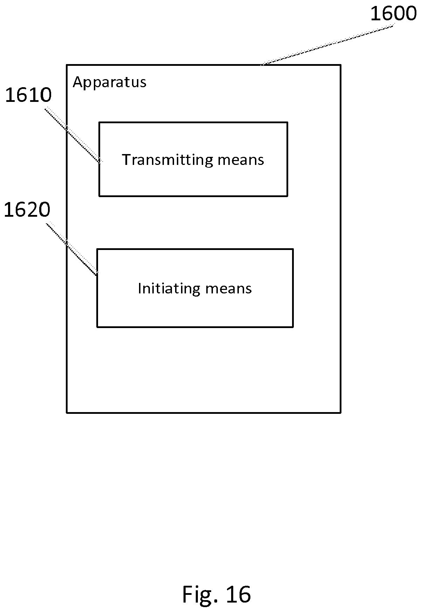

Fig. 16 illustrates an apparatus in accordance with embodiments of the invention. Apparatus 1600 can be a network element/entity, for example. Apparatus 1600 can include a transmitting means 1610 that transmits policy information to a user equipment. The policy information indicates at least one preferred radio-access-technology for a service. Apparatus 1600 may also include an initiating means 1620 that initiates a request for setup of the service. The request may be received from the user equipment. The request is transmitted by the user equipment after the user equipment enters a coverage area of the at least one preferred radio-access-technology corresponding to the service.

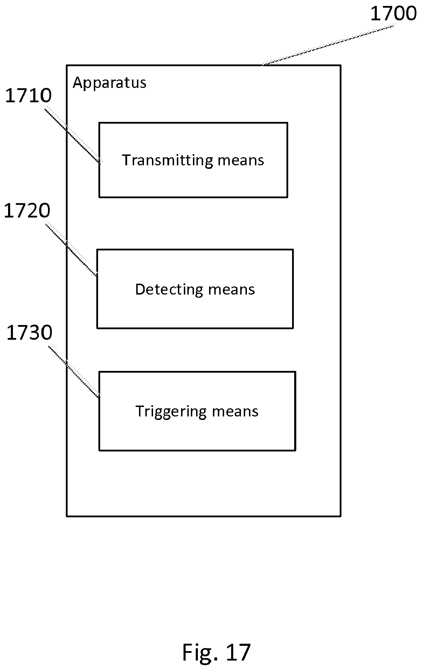

Fig. 17 illustrates an apparatus in accordance with embodiments of the invention. Apparatus 1700 can be a network element/entity, for example. Apparatus 1700 can include a transmitting means 1710 that transmits policy information to a user equipment. The user equipment is registered for a first radio-access technology. The policy information indicates that a second radio-access technology is a preferred radio-access-technology for a service. Apparatus 1700 may also include a detecting means 1720 that detects a need for the service. Apparatus 1700 may also include a triggering means 1730 that triggers the user equipment to establish the service in the second radio-access technology. The first radio-access technology comprises Long-term evolution. The second radio-access technology comprises 5G.

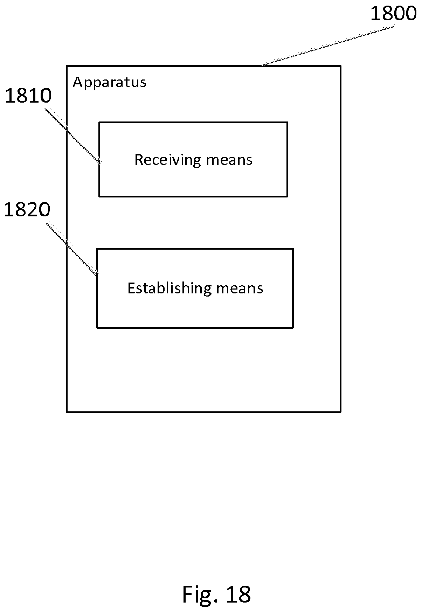

Fig. 18 illustrates an apparatus in accordance with embodiments of the invention. Apparatus 1800 can be a network element/entity such as a user equipment, for example. Apparatus 1800 can include a receiving means 1810 that receives policy information. The user equipment is registered for a first radio-access technology. The policy information indicates that a second radio-access technology is a preferred radio-access-technology for a service. Apparatus 1800 may also include an establishing means 1820 that establishes the service in the second radio-access technology. The first radio-access technology comprises Long-term evolution, and the second radio-access technology comprises 5G.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention as defined by the appended claims.

## Claims

1. A method performed by a user equipment, comprising:
receiving, when registered for a first radio access technology with a network, policy information from the network, wherein the policy information indicates at least one radio access technology preferred for a service, the at least one radio access technology preferred for the service being different from the first radio access technology;
entering a coverage area of the at least one radio access technology preferred for the service;
detecting that the service is offered in the coverage area;
initiating a request for setup of the service; and
setting up dual-connectivity to the first radio access technology and the radio access technology preferred for the service;
wherein the first radio access technology comprises Long-Term Evolution and the radio access technology preferred for the service comprises 5G.

2. The method according to claim 1, wherein the service comprises at least one of vehicle-to-vehicle service, machine-to-machine service, tactile internet service, mobile broadband service, public safety service, industrial control service, railways service, and device-to-device service.

3. A user equipment, comprising:
means for receiving, when the user equipment is registered for a first radio access technology with a network, policy information from the network, wherein the policy information indicates at least one radio access technology preferred for a service, the radio access technology preferred for the service being different from the first radio access technology;
means for detecting that the service is offered in a coverage area of the at least one radio access technology preferred for the service, wherein the detecting occurs when the user equipment has entered the coverage area;
means for initiating a request for setup of the service; and
means for setting up dual-connectivity to the first radio access technology and the radio access technology preferred for the service;
wherein the first radio access technology comprises Long-Term Evolution and the radio access technology preferred for the service comprises 5G.

4. The user equipment according to claim 3, wherein the service comprises at least one of vehicle-to-vehicle service, machine-to-machine service, tactile internet service, mobile broadband service, public safety service, industrial control service, railways service, and device-to-device service.

5. A method performed by an evolved node B for a network, comprising:
transmitting policy information to a user equipment registered for a first radio access technology with the network, wherein the policy information indicates that a second radio access technology is a radio access technology preferred for a service;
detecting a need for the service;
when the need for the service is detected, triggering the user equipment to set up dual-connectivity to the first radio access technology and the second radio access technology to establish the service in the second radio access technology;
wherein the first radio access technology comprises Long-Term Evolution and the second radio access technology comprises 5G.

6. The method according to claim 5, further comprising:
triggering the user equipment to perform measurements to determine whether the user equipment is in a coverage area of the second radio access technology;
determining whether the user equipment is in the coverage area of the second radio access technology based on the measurements; and
establishing a radio-resource-control connection in the second radio access technology, if the user equipment is in the coverage area of the second radio access technology.

7. An evolved node B for a network, comprising:
means for transmitting policy information to a user equipment registered for a first radio access technology with the network, wherein the policy information indicates that a second radio access technology is a radio access technology preferred for a service;
means for detecting a need for the service;
means for triggering, when the need for the service is detected, the user equipment to set up dual-connectivity to the first radio access technology and the second radio access technology to establish the service in the second radio access technology;
wherein the first radio access technology comprises Long-Term Evolution and the second radio access technology comprises 5G.

8. The evolved node B according to claim 7, further comprising:
means for triggering the user equipment to perform measurements to determine whether the user equipment is in a coverage area of the second radio access technology;
means for determining whether the user equipment is in the coverage area of the second radio access technology based on the measurements; and
means for establishing a radio-resource-control connection in the second radio access technology, if the user equipment is in the coverage area of the second radio access technology.

9. A method performed by a user equipment, comprising:
receiving, when registered for a first radio access technology with a network, policy information from the network, wherein the policy information indicates that a second radio access technology is a radio access technology preferred for a service;
detecting a need for the service;
determining that the user equipment is currently in an area where coverage by the second radio access technology is available;
setting up dual-connectivity to the first radio access technology and the second radio access technology when the need for the service is detected; and
establishing the service in the second radio access technology;
wherein the first radio access technology comprises Long-Term Evolution and the second radio access technology comprises 5G.

10. The method according to claim 9, further comprising:
performing measurements to determine whether the user equipment is in a coverage area of the second radio access technology;
transmitting a measurement report based on the measurements; and
establishing a radio-resource-control connection in the second radio access technology, if the user equipment is in the coverage area of the second radio access technology.

11. A user equipment, comprising:
means for receiving, when the user equipment is registered for a fist radio access technology with a network, policy information from the network, wherein the policy information indicates that a second radio access technology is a preferred radio access technology for a service;
means for detecting a need for the service;
means for determining that the user equipment is currently in an area where coverage by the second radio access technology is available;
means for setting up dual-connectivity to the first radio access technology and the second radio access technology when the need for the service is detected; and
means for establishing the service in the second radio access technology;
wherein the first radio access technology comprises Long-Term Evolution and the second radio access technology comprises 5G.

12. The user equipment according to claim 11, wherein the user equipment further comprises:
means for performing measurements to determine whether the user equipment is in a coverage area of the second radio access technology;
means for transmitting a measurement report based on the measurements; and
means for establishing a radio-resource-control connection in the second radio access technology, if the user equipment is in the coverage area of the second radio access technology.

13. A computer program, embodied on a computer readable medium, the computer program configured to control a processor of a user equipment according to claim 3 to perform a method according to any one of claims 1 and 2, a processor of an evolved node B according to claim 7 to perform a method according to any one of claims 5 and 6, and a processor of a user equipment according to claim 11 to perform a method according to any one of claims 9 and 10.

## Patentansprüche

1. Verfahren, das von einer Teilnehmereinrichtung durchgeführt wird und Folgendes umfasst:
Empfangen von Richtlinieninformationen von einem Netzwerk, sofern für eine erste Funkzugangstechnologie bei dem Netzwerk registriert, wobei die Richtlinieninformationen mindestens eine Funkzugangstechnologie anzeigt, die für einen Dienst bevorzugt wird, wobei sich die mindestens eine Funkzugangstechnologie, die für den Dienst bevorzugt wird, von der ersten Funkzugangstechnologie unterscheidet;
Eintreten in einen Abdeckungsbereich der mindestens einen Funkzugangstechnologie, die für den Dienst bevorzugt wird;
Detektieren, dass der Dienst im Abdeckungsbereich angeboten wird;
Initiieren einer Anforderung zur Einrichtung des Dienstes; und
Einrichten einer doppelten Konnektivität zur ersten Funkzugangstechnologie und zur Funkzugangstechnologie, die für den Dienst bevorzugt wird;
wobei die erste Funkzugangstechnologie Long-Term Evolution umfasst und die Funkzugangstechnologie, die für den Dienst bevorzugt wird, 5G umfasst.

2. Verfahren nach Anspruch 1, wobei der Dienst mindestens eines von einem Fahrzeug-zu-Fahrzeug-Dienst, einem Maschine-zu-Maschine-Dienst, einem taktilen Internetdienst, einem mobilen Breitbanddienst, einem öffentlichen Sicherheitsdienst, einem industriellen Steuerdienst, einem Eisenbahndienst und einem Vorrichtung-zu-Vorrichtung-Dienst umfasst.

3. Teilnehmereinrichtung, die Folgendes umfasst:
Mittel zum Empfangen von Richtlinieninformationen von einem Netzwerk, sofern die Teilnehmereinrichtung für eine erste Funkzugangstechnologie bei dem Netzwerk registriert ist, wobei die Richtlinieninformationen mindestens eine Funkzugangstechnologie anzeigt, die für einen Dienst bevorzugt wird, wobei sich die Funkzugangstechnologie, die für den Dienst bevorzugt wird, von der ersten Funkzugangstechnologie unterscheidet;
Mittel zum Detektieren, dass der Dienst in einem Abdeckungsbereich der mindestens einen Funkzugangstechnologie, die für den Dienst bevorzugt wird, angeboten wird, wobei das Detektieren erfolgt, nachdem die Teilnehmereinrichtung in den Abdeckungsbereich eingetreten ist;
Mittel zum Initiieren einer Anforderung zur Einrichtung des Dienstes; und
Mittel zum Einrichten einer doppelten Konnektivität zur ersten Funkzugangstechnologie und zur Funkzugangstechnologie, die für den Dienst bevorzugt wird;
wobei die erste Funkzugangstechnologie Long-Term Evolution umfasst und die Funkzugangstechnologie, die für den Dienst bevorzugt wird, 5G umfasst.

4. Teilnehmereinrichtung nach Anspruch 3, wobei der Dienst mindestens eines von einem Fahrzeug-zu-Fahrzeug-Dienst, einem Maschine-zu-Maschine-Dienst, einem taktilen Internetdienst, einem mobilen Breitbanddienst, einem öffentlichen Sicherheitsdienst, einem industriellen Steuerdienst, einem Eisenbahndienst und einem Vorrichtung-zu-Vorrichtung-Dienst umfasst.

5. Verfahren, das von einem Evolved Node B für ein Netzwerk durchgeführt wird und Folgendes umfasst:
Übertragen von Richtlinieninformationen zu einer Teilnehmereinrichtung, die für eine erste Funkzugangstechnologie beim Netzwerk registriert ist, wobei die Richtlinieninformationen anzeigen, dass eine zweite Funkzugangstechnologie eine Funkzugangstechnologie ist, die für einen Dienst bevorzugt wird;
Detektieren eines Bedarfs an dem Dienst;
Auslösen, wenn der Bedarf an dem Dienst detektiert wird, dass die Teilnehmereinrichtung eine doppelte Konnektivität zur ersten Funkzugangstechnologie und zur zweiten Funkzugangstechnologie einrichtet, um den Dienst in der zweiten Funkzugangstechnologie aufzubauen;
wobei die erste Funkzugangstechnologie Long-Term Evolution umfasst und die zweite Funkzugangstechnologie 5G umfasst.

6. Verfahren nach Anspruch 5, das ferner Folgendes umfasst:
Auslösen, dass die Teilnehmereinrichtung Messungen durchführt, um zu bestimmen, ob sich die Teilnehmereinrichtung in einem Abdeckungsbereich der zweiten Funkzugangstechnologie befindet;
Bestimmen auf Basis der Messungen, ob sich die Teilnehmereinrichtung im Abdeckungsbereich der zweiten Funkzugangstechnologie befindet; und
Aufbauen einer Funkressourcensteuerverbindung in der zweiten Funkzugangstechnologie, wenn sich die Teilnehmereinrichtung im Abdeckungsbereich der zweiten Funkzugangstechnologie befindet.

7. Evolved Node B für ein Netzwerk, der Folgendes umfasst:
Mittel zum Übertragen von Richtlinieninformationen zu einer Teilnehmereinrichtung, die für eine erste Funkzugangstechnologie beim Netzwerk registriert ist, wobei die Richtlinieninformationen anzeigen, dass eine zweite Funkzugangstechnologie eine Funkzugangstechnologie ist, die für einen Dienst bevorzugt wird;
Mittel zum Detektieren eines Bedarfs an dem Dienst;
Mittel zum Auslösen, wenn der Bedarf an dem Dienst detektiert wird, dass die Teilnehmereinrichtung eine doppelte Konnektivität zur ersten Funkzugangstechnologie und zur zweiten Funkzugangstechnologie einrichtet, um den Dienst in der zweiten Funkzugangstechnologie aufzubauen;
wobei die erste Funkzugangstechnologie Long-Term Evolution umfasst und die zweite Funkzugangstechnologie 5G umfasst.

8. Evolved Node B nach Anspruch 7, der ferner Folgendes umfasst:
Mittel zum Auslösen, dass die Teilnehmereinrichtung Messungen durchführt, um zu bestimmen, ob sich die Teilnehmereinrichtung in einem Abdeckungsbereich der zweiten Funkzugangstechnologie befindet;
Mittel zum Bestimmen auf Basis der Messungen, ob sich die Teilnehmereinrichtung im Abdeckungsbereich der zweiten Funkzugangstechnologie befindet; und
Mittel zum Aufbauen einer Funkressourcensteuerverbindung in der zweiten Funkzugangstechnologie, wenn sich die Teilnehmereinrichtung im Abdeckungsbereich der zweiten Funkzugangstechnologie befindet.

9. Verfahren, das von einer Teilnehmereinrichtung durchgeführt wird und Folgendes umfasst:
Empfangen von Richtlinieninformationen von einem Netzwerk, sofern für eine erste Funkzugangstechnologie bei dem Netzwerk registriert, wobei die Richtlinieninformationen anzeigen, dass eine zweite Funkzugangstechnologie eine Funkzugangstechnologie ist, die für einen Dienst bevorzugt wird;
Detektieren eines Bedarfs an dem Dienst;
Bestimmen, dass sich die Teilnehmereinrichtung derzeit in einem Bereich befindet, in dem eine Abdeckung durch die zweite Funkzugangstechnologie verfügbar ist;
Einrichten einer doppelten Konnektivität zur ersten Funkzugangstechnologie und zur zweiten Funkzugangstechnologie, wenn der Bedarf an dem Dienst detektiert wird; und
Aufbauen des Dienstes in der zweiten Funkzugangstechnologie;
wobei die erste Funkzugangstechnologie Long-Term Evolution umfasst und die zweite Funkzugangstechnologie 5G umfasst.

10. Verfahren nach Anspruch 9, das ferner Folgendes umfasst:
Durchführen von Messungen, um zu bestimmen, ob sich die Teilnehmereinrichtung in einem Abdeckungsbereich der zweiten Funkzugangstechnologie befindet;
Übertragen eines Messberichts auf Basis der Messungen; und
Aufbauen einer Funkressourcensteuerverbindung in der zweiten Funkzugangstechnologie, wenn sich die Teilnehmereinrichtung im Abdeckungsbereich der zweiten Funkzugangstechnologie befindet.

11. Teilnehmereinrichtung, die Folgendes umfasst:
Mittel zum Empfangen von Richtlinieninformationen von einem Netzwerk, sofern die Teilnehmereinrichtung für eine erste Funkzugangstechnologie bei dem Netzwerk registriert ist, wobei die Richtlinieninformationen anzeigen, dass eine zweite Funkzugangstechnologie eine bevorzugte Funkzugangstechnologie für einen Dienst ist;
Mittel zum Detektieren eines Bedarfs an dem Dienst;
Mittel zum Bestimmen, dass sich die Teilnehmereinrichtung derzeit in einem Bereich befindet, in dem eine Abdeckung durch die zweite Funkzugangstechnologie verfügbar ist;
Mittel zum Einrichten einer doppelten Konnektivität zur ersten Funkzugangstechnologie und zur zweiten Funkzugangstechnologie, wenn der Bedarf an dem Dienst detektiert wird; und
Mittel zum Aufbauen des Dienstes in der zweiten Funkzugangstechnologie;
wobei die erste Funkzugangstechnologie Long-Term Evolution umfasst und die zweite Funkzugangstechnologie 5G umfasst.

12. Teilnehmereinrichtung nach Anspruch 11, wobei die Teilnehmereinrichtung ferner Folgendes umfasst:
Mittel zum Durchführen von Messungen, um zu bestimmen, ob sich die Teilnehmereinrichtung in einem Abdeckungsbereich der zweiten Funkzugangstechnologie befindet;
Mittel zum Übertragen eines Messberichts auf Basis der Messungen; und
Mittel zum Aufbauen einer Funkressourcensteuerverbindung in der zweiten Funkzugangstechnologie, wenn sich die Teilnehmereinrichtung im Abdeckungsbereich der zweiten Funkzugangstechnologie befindet.

13. Computerprogramm, das auf einem computerlesbaren Medium enthalten ist, wobei das Computerprogramm dazu ausgelegt ist, einen Prozessor einer Teilnehmereinrichtung nach Anspruch 3 zum Durchführen eines Verfahrens nach einem der Ansprüche 1 und 2, einen Prozessor eines Evolved Node B nach Anspruch 7 zum Durchführen eines Verfahrens nach einem der Ansprüche 5 und 6 und einen Prozessor einer Teilnehmereinrichtung nach Anspruch 11 zum Durchführen eines Verfahrens nach einem der Ansprüche 9 und 10 zu steuern.

## Revendications

1. Procédé réalisé par un équipement utilisateur, comprenant :
la réception, lorsqu'il est enregistré pour une première technologie d'accès radio auprès d'un réseau, d'informations de politique à partir du réseau, dans lequel les informations de politique indiquent au moins une technologie d'accès radio préférée pour un service, la au moins une technologie d'accès radio préférée pour le service étant différente de la première technologie d'accès radio ;
l'entrée dans une zone de couverture de la au moins une technologie d'accès radio préférée pour le service ;
la détection que le service est proposé dans la zone de couverture ;
l'initiation d'une requête pour une mise en place du service ; et
la mise en place d'une double connectivité avec la première technologie d'accès radio et la technologie d'accès radio préférée pour le service ;
dans lequel la première technologie d'accès radio comprend l'Évolution à Long Terme et la technologie d'accès radio préférée pour le service comprend la 5G.

2. Procédé selon la revendication 1, dans lequel le service comprend au moins l'un parmi un service de véhicule à véhicule, un service de machine à machine, un service Internet tactile, un service mobile à large bande, un service de sécurité publique, un service de commande industrielle, un service de chemins de fer et un service de dispositif à dispositif.

3. Équipement utilisateur, comprenant :
un moyen de réception, lorsque l'équipement utilisateur est enregistré pour une première technologie d'accès radio auprès d'un réseau, d'informations de politique à partir du réseau, dans lequel les informations de politique indiquent au moins une technologie d'accès radio préférée pour un service, la technologie d'accès radio préférée pour le service étant différente de la première technologie d'accès radio ;
un moyen de détection que le service est proposé dans une zone de couverture de la au moins une technologie d'accès radio préférée pour le service, dans lequel la détection survient lorsque l'équipement utilisateur est entré dans la zone de couverture ;
un moyen d'initiation d'une requête pour une mise en place du service ; et
un moyen de mise en place d'une double connectivité avec la première technologie d'accès radio et la technologie d'accès radio préférée pour le service ;
dans lequel la première technologie d'accès radio comprend l'Évolution à Long Terme et la technologie d'accès radio préférée pour le service comprend la 5G.

4. Équipement utilisateur selon la revendication 3, dans lequel le service comprend au moins l'un parmi un service de véhicule à véhicule, un service de machine à machine, un service Internet tactile, un service mobile à large bande, un service de sécurité publique, un service de commande industrielle, un service de chemins de fer et un service de dispositif à dispositif.

5. Procédé réalisé par un nœud B évolué pour un réseau, comprenant :
l'émission d'informations de politique vers un équipement utilisateur enregistré pour une première technologie d'accès radio auprès du réseau, dans lequel les informations de politique indiquent qu'une seconde technologie d'accès radio est une technologie d'accès radio préférée pour un service ;
la détection d'un besoin du service ;
lorsque le besoin du service est détecté, le déclenchement de l'équipement utilisateur afin qu'il mette en place une double connectivité avec la première technologie d'accès radio et la seconde technologie d'accès radio pour établir le service dans la seconde technologie d'accès radio ;
dans lequel la première technologie d'accès radio comprend l'Évolution à Long Terme et la seconde technologie d'accès radio comprend la 5G.

6. Procédé selon la revendication 5, comprenant en outre :
le déclenchement de l'équipement de l'utilisateur afin qu'il réalise des mesures pour déterminer si l'équipement utilisateur est dans une zone de couverture de la seconde technologie d'accès radio ;
la détermination de si l'équipement utilisateur est dans la zone de couverture de la seconde technologie d'accès radio sur la base des mesures ; et
l'établissement d'une connexion de commande de ressource radio dans la seconde technologie d'accès radio, si l'équipement utilisateur est dans la zone de couverture de la seconde technologie d'accès radio.

7. Nœud B évolué pour un réseau, comprenant :
un moyen d'émission d'informations de politique vers un équipement utilisateur enregistré pour une première technologie d'accès radio auprès du réseau, dans lequel les informations de politique indiquent qu'une seconde technologie d'accès radio est une technologie d'accès radio préférée pour un service ;
un moyen de détection d'un besoin du service ;
un moyen de déclenchement, lorsque le besoin du service est détecté, de l'équipement utilisateur afin qu'il mette en place une double connectivité avec la première technologie d'accès radio et la seconde technologie d'accès radio pour établir le service dans la seconde technologie d'accès radio ;
dans lequel la première technologie d'accès radio comprend l'Évolution à Long Terme et la seconde technologie d'accès radio comprend la 5G.

8. Nœud B évolué selon la revendication 7, comprenant en outre :
un moyen de déclenchement de l'équipement de l'utilisateur afin qu'il réalise des mesures pour déterminer si l'équipement utilisateur est dans une zone de couverture de la seconde technologie d'accès radio ;
un moyen de détermination de si l'équipement utilisateur est dans la zone de couverture de la seconde technologie d'accès radio sur la base des mesures ; et
un moyen d'établissement d'une connexion de commande de ressource radio dans la seconde technologie d'accès radio, si l'équipement utilisateur est dans la zone de couverture de la seconde technologie d'accès radio.

9. Procédé réalisé par un équipement utilisateur, comprenant :
la réception, lorsqu'il est enregistré pour une première technologie d'accès radio auprès d'un réseau, d'informations de politique à partir du réseau, dans lequel les informations de politique indiquent qu'une seconde technologie d'accès radio est une technologie d'accès radio préférée pour un service ;
la détection d'un besoin du service ;
la détermination que l'équipement utilisateur est actuellement dans une zone où une couverture par la seconde technologie d'accès radio est disponible ;
la mise en place d'une double connectivité avec la première technologie d'accès radio et la seconde technologie d'accès radio lorsque le besoin du service est détecté ; et
l'établissement du service dans la seconde technologie d'accès radio ;
dans lequel la première technologie d'accès radio comprend l'Évolution à Long Terme et la seconde technologie d'accès radio comprend la 5G.

10. Procédé selon la revendication 9, comprenant en outre :
la réalisation de mesures pour déterminer si l'équipement utilisateur est dans une zone de couverture de la seconde technologie d'accès radio ;
l'émission d'un rapport de mesure sur la base des mesures ; et
l'établissement d'une connexion de commande de ressource radio dans la seconde technologie d'accès radio, si l'équipement utilisateur est dans la zone de couverture de la seconde technologie d'accès radio.

11. Équipement utilisateur, comprenant :
un moyen de réception, lorsque l'équipement utilisateur est enregistré pour une première technologie d'accès radio auprès d'un réseau, d'informations de politique à partir du réseau, dans lequel les informations de politique indiquent qu'une seconde technologie d'accès radio est une technologie d'accès radio préférée pour un service ;
un moyen de détection d'un besoin du service ;
un moyen de détermination que l'équipement utilisateur est actuellement dans une zone où une couverture par la seconde technologie d'accès radio est disponible ;
un moyen de mise en place d'une double connectivité avec la première technologie d'accès radio et la seconde technologie d'accès radio lorsque le besoin du service est détecté ; et
un moyen d'établissement du service dans la seconde technologie d'accès radio ;
dans lequel la première technologie d'accès radio comprend l'Évolution à Long Terme et la seconde technologie d'accès radio comprend la 5G.

12. Équipement utilisateur selon la revendication 11, dans lequel l'équipement utilisateur comprend en outre :
un moyen de réalisation de mesures pour déterminer si l'équipement utilisateur est dans une zone de couverture de la seconde technologie d'accès radio ;
un moyen d'émission d'un rapport de mesure sur la base des mesures ; et
un moyen d'établissement d'une connexion de commande de ressource radio dans la seconde technologie d'accès radio, si l'équipement utilisateur est dans la zone de couverture de la seconde technologie d'accès radio.

13. Programme d'ordinateur, incorporé sur un support lisible par ordinateur, le programme d'ordinateur étant configuré pour commander un processeur d'un équipement utilisateur selon la revendication 3 pour réaliser un procédé selon l'une quelconque des revendications 1 et 2, un processeur d'un nœud B évolué selon la revendication 7 pour réaliser un procédé selon l'une quelconque des revendications 5 et 6, et un processeur d'un équipement utilisateur selon la revendication 11 pour réaliser un procédé selon l'une quelconque des revendications 9 et 10.
